(19) Europäisches Patentamt
European Patent Office
Office européen des brevets

(11) EP 2 509 147 A1

(12) **EUROPEAN PATENT APPLICATION**
published in accordance with Art. 153(4) EPC

(43) Date of publication:
**10.10.2012 Bulletin 2012/41**

(21) Application number: **10833382.4**

(22) Date of filing: **29.11.2010**

(51) Int Cl.:
***H01M 10/052*** *(2010.01)* ***H01M 2/16*** *(2006.01)*
***H01M 4/13*** *(2010.01)*

(86) International application number:
**PCT/JP2010/071268**

(87) International publication number:
**WO 2011/065538 (03.06.2011 Gazette 2011/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2009 JP 2009272094**

(71) Applicant: **Sanyo Electric Co., Ltd.**
**Osaka 570-8677 (JP)**

(72) Inventors:
- **OKUSHI, Koji**
  **Moriguchi-shi**
  **Osaka 570-8677 (JP)**
- **OKI, Yukihiro**
  **Moriguchi-shi**
  **Osaka 570-8677 (JP)**
- **IWANAGA, Masato**
  **Moriguchi-shi**
  **Osaka 570-8677 (JP)**

(74) Representative: **Glawe, Delfs, Moll**
**Patent- und Rechtsanwälte**
**Postfach 26 01 62**
**80058 München (DE)**

# (54) NON-AQUEOUS ELECTROLYTE RECHARGEABLE BATTERY

(57) The present invention provides a nonaqueous electrolyte secondary battery that can be charged at high voltage and suppress capacity deterioration after charged storage in a high temperature environment.

A nonaqueous electrolyte secondary battery 10 includes a positive electrode sheet 11, a negative electrode sheet 12, a nonaqueous electrolyte, and a separator 13, and the positive electrode active material has a potential of 4.35 to 4.60 V based on lithium. The positive electrode sheet 11 has a surface provided with an inorganic particle layer. The separator 13 has an average pore size of 0.15 μm or more and 0.3 μm or less. It is preferable that the inorganic particle layer provided to the surface of the positive electrode sheet 11 contain titanium oxide or aluminum oxide.

FIG.1

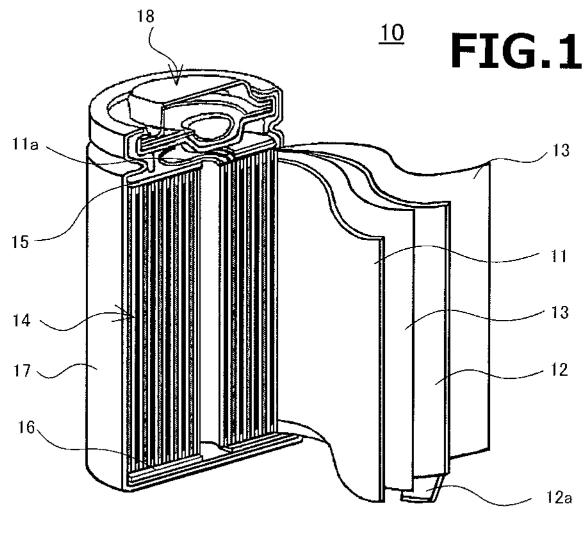


EP 2 509 147 A1

## Description

TECHNICAL FIELD

The present invention relates to a nonaqueous electrolyte secondary battery and in particular, relates to a nonaqueous electrolyte secondary battery that includes a positive electrode sheet including a surface having an inorganic particle layer and a separator having a large pore size and that can be charged at high voltage and suppress capacity deterioration after charged storage in a high temperature environment.

BACKGROUND ART

Nonaqueous electrolyte secondary batteries represented by lithium ion secondary batteries having a high energy density and high capacity are widely used as power supplies for portable electronic equipment such as cell phones, portable personal computers, and portable music players, and further, as power supplies for hybrid electric vehicles (HEVs) and electric vehicles (EVs).

For the positive electrode active material in these nonaqueous secondary batteries, lithium transition-metal composite oxides expressed by $LiMO_2$ (where M is at least one of Co, Ni, and Mn) that can reversibly adsorb and desorb lithium ions, namely $LiCoO_2$, $LiNiO_2$, $LiNi_yCo_{1-y}O_2$ (y = 0.01 to 0.99), $LiMnO_2$, $LiMn_2O_4$, $LiCo_xMn_yNi_zO_2$ (x + y + z = 1), $LiFePO_4$, and the like are used singly, or as a mixture of two or more of them.

Among them, lithium-cobalt composite oxides and dissimilar metallic element-containing lithium-cobalt composite oxides are primarily used because their battery characteristics in various aspects are especially higher than those of other oxides. However, cobalt is expensive and exists in small amounts as a natural resource. Thus, in order to continue to use such lithium-cobalt composite oxides and dissimilar metallic element-containing lithium-cobalt composite oxides as the positive electrode active material of nonaqueous secondary batteries, it is desired to raise the performance of nonaqueous secondary batteries to even higher levels.

Commonly, a nonaqueous electrolyte secondary battery containing $LiCoO_2$ as the positive electrode active material and containing graphite as the negative electrode active material has a final charge voltage of 4.20 V. One of the methods for increasing the capacity of a nonaqueous electrolyte secondary battery containing such a lithium-cobalt composite oxide as the positive electrode active material is to increase the final charge voltage from 4.30 V, which is commonly employed, to about 4.60 V. That is, even when the final charge voltage varies between 4.20 V and 4.60 V, the graphite as the negative electrode active material has a constant potential of about 0.1 V based on lithium. Therefore, the positive electrode potential is increased as much as an increased final charge voltage.

When a nonaqueous electrolyte secondary battery that includes a substance (for example, silicon) having a higher potential based on lithium at the final charge voltage than that of the graphite as the negative electrode active material is used at the same final charge voltage as that of a battery containing the graphite, such a battery obtains a higher positive electrode potential than that of the battery containing the graphite as the negative electrode active material.

However, in a nonaqueous electrolyte secondary battery having an increased final charge voltage, a nonaqueous electrolytic solution that is in contact with the positive electrode active material may be oxidized to reach the negative electrode side through pores in a separator and may be reduced on the negative electrode active material to form a deposit. The deposit grows from the negative electrode side and accumulates in empty pores in the separator to close the pores in the separator. This interferes with the transfer of lithium ions through the separator to reduce the capacity. The capacity reduction is remarkable especially in a high temperature environment.

In order to solve the problem of capacity reduction in a high temperature environment of a nonaqueous electrolyte secondary battery having a higher capacity due to such higher charge voltage, for example, Patent Document 1 discloses an invention of a nonaqueous electrolyte secondary battery that includes at least cobalt or manganese as the positive electrode active material, an inorganic particle layer containing inorganic particles and a binder formed between a positive electrode sheet and a separator, and a nonaqueous electrolytic solution including a lithium salt containing $LiBF_4$ and that is charged until the voltage reaches 4.40 V or more based on lithium.

According to the invention of the nonaqueous electrolyte secondary battery disclosed in Patent Document 1, $LiBF_4$ contained in the electrolytic solution forms a film on a surface of the positive electrode active material, and the film can suppress the elution of cobalt ions or manganese ions constituting the positive electrode active material and the decomposition of the nonaqueous electrolytic solution on a surface of the positive electrode sheet. Therefore, the invention disclosed in Patent Document 1 provides excellent advantages of suppressing the precipitation of the cobalt ions or the manganese ions or the precipitation of the decomposed product of the nonaqueous electrolytic solution on the surface of the negative electrode sheet.

The invention of the nonaqueous electrolyte secondary battery disclosed in Patent Document 1 provides other advantages. That is, the inorganic particle layer formed between the positive electrode sheet and the separator provides a filter function of trapping the cobalt ions or the decomposed product on the positive electrode sheet, the filter function

can suppress the transfer to the negative electrode side, such that the growth of the deposit on the negative electrode side is suppressed, and the reduction of the charge storage characteristics is consequently suppressed.

[Related Art Document]

[Patent Document]

[Patent Document 1] JP-A-2007-280917

DISCLOSURE OF INVENTION

PROBLEM TO BE SOLVED BY THE INVENTION

However, the nonaqueous electrolyte secondary battery disclosed in Patent Document 1 has disadvantages in which high reactivity between $LiBF_4$ contained in the nonaqueous electrolytic solution and the positive electrode sheet reduces the concentration of the lithium salt in the nonaqueous electrolytic solution to reduce the conductivity of the nonaqueous electrolytic solution. The filter function of the inorganic particle layer formed between the positive electrode sheet and the separator suppresses the growth itself of the deposit. However, there are other problems in which a separator having a small average pore size of 0.1 μm causes clogging of empty pores in the separator even with small amounts of the deposit and the separator is likely to be clogged.

The present inventors have carried out various studies in order to solve the problems, as a result, have found that by forming an inorganic particle layer on the positive electrode sheet as well as by using a separator including empty pores having an average pore size of 0.15 μm or more and 0.3 μm or less, the capacity deterioration during charged storage in an environment at high temperature and high voltage can be greatly suppressed, and the invention has been accomplished.

That is, it is an object of the invention to provide a nonaqueous electrolyte secondary battery that suppresses the capacity reduction after charged storage in a high temperature environment even when the potential of a positive electrode active material, namely the final charge voltage, is a high voltage of more than 4.30 V based on lithium.

MEANS FOR SOLVING PROBLEM

In order to achieve the object, a nonaqueous electrolyte secondary battery of the invention includes a positive electrode sheet, a negative electrode sheet, a nonaqueous electrolyte, and a separator. The positive electrode sheet includes a positive electrode active material having a potential of 4.35 to 4.60 V based on lithium, the positive electrode sheet has a surface provided with an inorganic particle layer, and the separator has an average pore size of 0.15 μm or more and 0.3 μm or less.

With the nonaqueous electrolyte secondary battery of the invention, the use of the separator having a large average pore size of 0.15 μm or more and 0.3 μm or less achieves a battery having empty pores that are unlikely to be closed even when the potential of the positive electrode active material, namely the final charge potential, is a high voltage of 4.35 to 4.60 V based on lithium to lead to the growth of a deposit on the negative electrode side. In a common nonaqueous electrolyte secondary battery, even when a separator having a large pore size is simply used alone, the transfer of an oxidative decomposition product of the nonaqueous electrolytic solution from the positive electrode side to the negative electrode side cannot be sufficiently suppressed. Hence, such a battery cannot suppress the reduction of storage capacity in the case of charged storage.

However, the nonaqueous electrolyte secondary battery of the invention further includes the inorganic particle layer on the positive electrode sheet. Thus, the inorganic particle layer traps the oxidative decomposition product of the nonaqueous electrolyte on the surface of the positive electrode sheet to suppress the transfer of the oxidative decomposition product from the positive electrode side to the negative electrode side. Therefore, the nonaqueous electrolyte secondary battery of the invention can provide a nonaqueous electrolyte secondary battery that greatly suppresses the capacity deterioration during charged storage in a high temperature environment even when the potential of the positive electrode active material is a high voltage of 4.35 to 4.60 V based on lithium. In the nonaqueous electrolyte secondary battery of the invention, the positive electrode sheet more preferably has a final charge voltage of 4.40 V to 4.60 V based on lithium in consideration of the increase effect of the battery capacity.

A separator having an average pore size of less than 0.15 μm is not preferred because such a separator causes clogging in empty pores and is likely to cause separator clogging when the deposit grows on the negative electrode side. A separator having an average pore size of more than 0.3 μm is also not preferred because a deposit growing on

the negative electrode side may pass through empty pores in the separator, while self-discharge is likely to be caused during high temperature storage such that capacity deterioration is likely to be caused during charged storage in a high temperature environment.

The positive electrode active material used in the nonaqueous electrolyte secondary battery of the invention is preferably a mixture of layered lithium nickel manganese cobalt composite oxide and lithium cobalt oxide containing magnesium, aluminum, and zirconium. The preferably used layered lithium nickel manganese cobalt composite oxide is $Li_aMn_sNi_tCo_uM1_vO_2$ (M1 is at least one element selected from Mg, Zr, Al, Ti, and Sn, $0 \leq a \leq 1.2$, $0.1 \leq s \leq 0.5$, $0.1 \leq t \leq 0.5$, $u \geq 0$, $0.0001 \leq v \leq 0.03$, and $s + t + u + v = 1$). The preferably used lithium cobalt oxide is a mixture with $Li_bCo_{1-x-y-z}Zr_xMg_yM2_zO_2$ (M2 is at least one element selected from Al, Ti, and Sn, $0 \leq b \leq 1.1$, $x \geq 0.0001$, $y \geq 0.0001$, $z \geq 0$, and $0.0002 \leq x + y + z \leq 0.03$). The mixing ratio of the layered lithium nickel manganese cobalt composite oxide and the lithium cobalt oxide is layered lithium nickel manganese cobalt composite oxide : lithium cobalt oxide = 49 : 51 to 10 : 90 and preferably 30 : 70 to 20 : 80 by mass. However, the nonaqueous electrolyte secondary battery of the invention is not limited to the above, and any positive electrode active material can be used as long as a battery can obtain good battery characteristics when the battery is charged until the potential of the positive electrode sheet reaches 4.35 to 4.60 V based on lithium. For example, the lithium cobalt oxide containing magnesium, aluminum, and zirconium can be used alone.

Examples of the negative electrode active material used in the nonaqueous electrolyte secondary battery of the invention include materials capable of reversibly adsorbing and desorbing lithium ions, including carbonaceous materials such as natural graphite, artificial graphite, and coke; alloys and oxides containing silicon, tin, and the like; and mixtures of these.

In the nonaqueous electrolyte secondary battery of the invention, it is preferable that titanium oxide or aluminum oxide be used as the inorganic particle layer.

As the inorganic particles formed on the surface of the positive electrode sheet, titanium oxide, aluminum oxide, zinc oxide, magnesium oxide, or the like may be used. However, titanium oxide and aluminum oxide have low reactivity with lithium and excellent stability in the nonaqueous electrolyte secondary battery and is inexpensive. Therefore, the nonaqueous electrolyte secondary battery of the invention can inexpensively provide a nonaqueous electrolyte secondary battery that greatly suppresses the capacity deterioration during charged storage in a higher temperature environment even when the potential of the positive electrode active material is a high voltage of 4.35 to 4.60 V based on lithium.

In the nonaqueous electrolyte secondary battery of the invention, graphite or silicon may be used as the negative electrode active material used for the negative electrode sheet.

The use of graphite or silicon as the negative electrode active material can provide a nonaqueous electrolyte secondary battery that greatly suppresses the capacity deterioration during charged storage in a higher temperature environment even when the potential of the positive electrode active material is a high voltage of 4.35 to 4.60 V based on lithium.

## BRIEF DESCRIPTION OF DRAWINGS

[Fig. 1] Fig. 1 is a perspective view showing a longitudinal section of a cylindrical-shaped nonaqueous electrolyte secondary battery used for the measurement of various battery characteristics in each of the Examples, Comparative Examples, and Reference Examples.

## BEST MODE(S) FOR CARRYING OUT THE INVENTION

Hereinafter, embodiments for carrying out the invention will be described in detail with reference to examples, comparative examples, and reference examples. However, the examples described below are an illustrative example of nonaqueous electrolyte secondary batteries for embodying the technical spirit of the invention, is not intended to limit the invention to the examples, and the invention may be equally applied to various modified batteries without departing from the technical spirit described in the claims. A battery containing graphite as the negative electrode active material has a charging voltage and a battery capacity that are different from those of a battery containing silicon. Hence, the case using the graphite as the negative electrode active material will be described first, and the case using the silicon as the negative electrode active material will be described next.

[Reference Examples 1 to 4, Comparative Examples 1 to 8, and Examples 1 and 2]

First, nonaqueous electrolyte secondary batteries containing the graphite as the negative electrode active material of Reference Examples 1 to 4, Comparative Examples 1 to 8, and Examples 1 and 2 will be described.

[Preparation of Positive Electrode Sheet]

Layered lithium nickel manganese cobalt composite oxide and lithium cobalt oxide containing magnesium, aluminum, and zirconium ($LiCo_{0.973}Mg_{0.005}Al_{0.02}Zr_{0.002}O_2$) were mixed in the ratio of 1 : 9 by mass to be used as the positive electrode active material. The mixture was mixed with carbon black as a conductive auxiliary agent and a fluorine resin as a binder in the ratio of 94 : 3 : 3 by mass and the resultant mixture was dissolved in N-methyl-2-pyrrolidone (NMP) to make a positive electrode active material paste.

The positive electrode active material paste was evenly applied on both sides of an aluminum foil having a thickness of 15 μm by the doctor blade method. Next, the coated foil was treated with heat under vacuum at a temperature ranging from 100 to 150°C in a heated dryer to remove the NMP, and then pressed with a roll press so as to have a thickness of 0.13 mm, to prepare a positive electrode sheet used in each of the Examples, Comparative Examples, and Reference Examples.

Next, for each positive electrode sheet of Examples 1 and 2, Comparative Examples 3 to 6, and Reference Examples 3 and 4, titanium oxide (Example 1, Comparative Example 3, Comparative Example 5, and Reference Example 3) or aluminum oxide (Example 2, Comparative Example 4, Comparative Example 6, and Reference Example 4) was mixed with a water-soluble binder and water to make a slurry, and the slurry was applied on both sides of the positive electrode sheet prepared as above by the doctor blade method to form an inorganic particle layer having a thickness of about 0.5 μm to 3 μm on each surface of the positive electrode sheet.

[Preparation of Negative Electrode Sheet]

Graphite as a negative electrode active material, styrene-butadiene rubber (SBR) as a binder, and carboxymethylcellulose (CMC) as a viscosity modifier were mixed in the ratio of 96 : 2 : 2 by mass and the mixture was dissolved in water to make a negative electrode active material paste. The negative electrode active material paste was evenly applied on both sides of a copper foil having a thickness of 10 μm by the doctor blade method. Next, the coated foil was treated with heat at a temperature ranging from 100 to 150°C in a heated dryer to remove water, and then pressed with a roll press so as to have a thickness of 0.12 mm, to prepare a negative electrode sheet used in each of the Examples, Comparative Examples, and Reference Examples. To form an inorganic particle layer on each surface of the negative electrode sheet (Comparative Example 7 and Comparative Example 8), titanium oxide powder was mixed with an acrylic binder and NMP to make a slurry, and the slurry was applied on both sides of the negative electrode sheet by the doctor blade method to form the inorganic particle layer.

The amount of each active material applied on the positive electrode sheet and the negative electrode sheet was controlled so that, at the charging voltage as the design standard, the charging capacity ratio (negative electrode charging capacity/positive electrode charging capacity) would be 1.1 in an area where the positive electrode sheet and the negative electrode sheet were opposed to each other.

[Preparation of Nonaqueous Electrolyte]

Ethylene carbonate (EC) and methyl ethyl carbonate (MEC) were mixed in the proportion of 30 : 70 by volume (in terms of 1 atmosphere at 25°C) to prepare a nonaqueous solvent. $LiPF_6$ as an electrolyte salt was dissolved in the ratio of 1.2 mol/L in the nonaqueous solvent. Vinylene carbonate (VC) was added to the solution so as to provide the ratio of 2% by mass in order to prepare a nonaqueous electrolyte used in each of the Examples, Comparative Examples, and Reference Examples.

[Preparation of Battery]

The positive electrode sheet, the negative electrode sheet, and the nonaqueous electrolyte, each prepared as described above, and a separator made of polyethylene microporous membrane having a thickness of 16 μm and a predetermined average pore size were used to prepare a cylindrical-shaped (ϕ18 mm × 65 mm) nonaqueous electrolyte secondary battery (1 It = 2700 mA) as shown in Fig. 1 that was common to each of the Examples, Comparative Examples, and Reference Examples. The mode diameter for the average pore size of the separator was determined using a mercury porosimeter and was regarded as the average pore size.

Fig. 1 is a perspective view showing a longitudinal section of the cylindrical-shaped nonaqueous electrolyte secondary battery used for the measurement of various battery characteristics in each of the Examples, Comparative Examples, and Reference Examples. A nonaqueous electrolyte secondary battery 10 includes a wound electrode assembly 14 that is formed by winding a positive electrode sheet 11 and a negative electrode sheet 12 with a separator 13 interposed between the sheets; insulating plates 15 and 16 are placed on the top and bottom of the wound electrode assembly 14, respectively; and the wound electrode assembly 14 is put into a cylindrical-shaped battery outer can 17

made of steel also serving as a negative electrode terminal. Then, a current collecting tab 12a of the negative electrode sheet 12 is welded on an inner bottom part of the battery outer can 17 and a current collecting tab 11a of the positive electrode sheet 11 is welded on the bottom plate part of a current interrupting seal 18 incorporating a safety apparatus; a predetermined nonaqueous electrolyte is poured from a mouth portion of the battery outer can 17; and then the battery outer can 17 is sealed up with the current interrupting seal 18.

[Charge and Discharge Test]

Battery capacity measurement at ordinary temperature and storage test in a high temperature environment were carried out for each battery of the Examples, Comparative Examples, and Reference Examples prepared as above. The charge condition and the discharge condition in each the of Examples and Comparative Examples were as below.

● Charge Condition

A battery was charged at 25°C at a constant current of 1.0 It = 2700 mA until the battery voltage reached 4.35 V (the positive electrode sheet had a potential of 4.45 V based on lithium because graphite used in the negative electrode sheet had a potential of about 0.1 V based on lithium) and then was charged at a constant voltage of 4.35 V until the current reached 1/50 It = 54 mA.

● Discharge Condition

A battery was discharged at 25°C at a constant current of 1.0 It until the battery voltage reached 3.0 V (the positive electrode sheet had a potential of 3.1 V based on lithium).

First, each battery was charged and discharged in the charge condition and the discharge condition above to determine the discharging capacity (mAh) of the battery as the battery capacity of each battery. Then, the battery capacity (%) of each battery was calculated in accordance with the calculation formula below as the relative value to the battery of Comparative Example 1.

$$\text{Battery capacity (\%)} = \text{(each battery capacity)/(battery capacity of Comparative Example 1)} \times 100$$

[Calculation of Residual Capacity after Storage]

First, a battery was charged at 25°C at a constant current of 0.5 It = 1350 mA until the battery voltage reached 4.35 V; after the battery voltage reached 4.35 V, the battery was charged at a constant voltage of 4.35 V until the current reached 1/50 It = 54 mA; and then the battery was discharged at a constant current of 0.5 It until the battery voltage reached 3.0 V. Next, the battery was charged and discharged at 25°C in the charge and discharge conditions above to determine the discharging capacity as the initial capacity.

The battery charged in the charge condition was placed in a constant temperature chamber at 60°C and stored for 14 days. Next, the battery was cooled to 25°C and then discharged in the discharge condition. Such a cycle was repeated three times. The discharging capacity at the third discharge (after 42 days) was determined and the residual capacity after storage was calculated in accordance with the formula below.

$$\text{Residual capacity after storage (\%)} = \text{(discharging capacity at the third cycle/initial capacity)} \times 100$$

Furthermore, in each Reference Example, the battery capacity measurement at ordinary temperature and the storage test in a high temperature environment were carried out in a similar manner to that in each of the Examples and Comparative Examples except that the charging voltage was 4.20 V (the positive electrode sheet had a potential of 4.3 V based on lithium) and the final discharge voltage was 2.75 V (the positive electrode sheet had a potential of 2.85 V based on lithium) in the charge and discharge conditions. The results are summarized in Table 1.

[Table 1]

| | Voltage (V) | Positive electrode functional layer | Negative electrode functional layer | Average pore size (μm) of separator | Residual capacity after storage | | Battery capacity | |
|---|---|---|---|---|---|---|---|---|
| | | | | | (%) | Judgment | (%) | Judgment |
| Reference Example 1 | 4.20 | - | - | 0.07 | 88 | O | 100 | × |
| Reference Example 2 | 4.20 | - | - | 0.25 | 87 | O | 100 | × |
| Reference Example 3 | 4.20 | Titanium oxide | - | 0.25 | 87 | O | 100 | × |
| Reference Example 4 | 4.20 | Aluminum oxide | - | 0.25 | 86 | O | 100 | × |
| Comparative Example 1 | 4.35 | - | - | 0.07 | 70 | × | 106 | O |
| Comparative Example 2 | 4.35 | - | - | 0.25 | 62 | × | 106 | O |
| Comparative Example 3 | 4.35 | Titanium oxide | - | 0.07 | 73 | × | 106 | O |
| Comparative Example 4 | 4.35 | Aluminum oxide | - | 0.07 | 74 | × | 106 | O |
| Comparative Example 5 | 4.35 | Titanium oxide | - | 0.35 | 80 | × | 106 | O |
| Comparative Example 6 | 4.35 | Aluminum oxide | - | 0.35 | 79 | × | 106 | O |
| Comparative Example 7 | 4.35 | - | Titanium oxide | 0.07 | 71 | × | 106 | O |
| Comparative Example 8 | 4.35 | - | Titanium oxide | 0.25 | 64 | × | 106 | O |
| Example 1 | 4.35 | Titanium oxide | - | 0.25 | 86 | O | 106 | O |
| Example 2 | 4.35 | Aluminum oxide | - | 0.25 | 87 | O | 106 | O |

The results shown in Table 1 reveal the following. First, from the results of Reference Examples 1 to 4, each battery having a low charging voltage of 4.2 V provided a good result of a residual capacity after storage of 85% or more regardless of the presence or absence of the inorganic particle layer formed on each surface of the positive electrode sheet or the average pore size of the separator.

In Reference Examples 1 to 4 and Comparative Examples 1 to 4, the charging voltage was 4.20 V in Reference Examples 1 to 4 and was 4.35 V in Comparative Examples 1 to 4. The separator had an average pore size of 0.07 μm in Reference Example 1 and Comparative Examples 1, 3, and 4 and had an average pore size of 0.25 μm in Reference Examples 2 to 4 and Comparative Example 2.

From the comparison of Reference Examples 1 to 4 with Comparative Examples 1 to 4, the residual capacity after storage was reduced in a high voltage environment of 4.35 V and this reveals that the capacity deterioration is likely to progress in such an environment. In particular, from the comparison of Comparative Example 1 with Comparative Example 2, when the positive electrode sheet had each surface provided with no inorganic particle layer, the separator having a large pore size (0.25 μm) led to a large reduction of the residual capacity after storage. This reveals that the selection of the separator having a small pore size (0.07 μm) can slightly suppress the capacity deterioration.

The comparison of Comparative Example 1 with Comparative Examples 3 and 4 reveals that the positive

electrode sheet having each surface provided with an inorganic particle layer can further suppress the capacity deterioration. However, in comparison with each Reference Example that was not in the high voltage environment, the improving effect remains insufficient.

The comparison of Comparative Example 3 with Example 1 and of Comparative Example 4 with Example 2 reveals that the combination of the separator having a large pore size with the inorganic particle layer formed on each surface of the positive electrode sheet can greatly suppress the capacity deterioration and achieves substantially the same residual capacity after storage as that of each Reference Example that was not in the high voltage environment. In other words, a separator having a large pore size should lead to larger capacity deterioration intrinsically as apparent from the comparison of Comparative Examples 1 and 2. However, as described above, it is revealed that the combination with the inorganic particle layer formed on each surface of the positive electrode sheet provides a synergistic improving effect on the capacity deterioration and the reduction of the residual capacity after storage can be greatly improved.

Comparative Example 5 and Comparative Example 6 were examples that used the positive electrode sheet having each surface provided with an inorganic particle layer composed of titanium oxide (Comparative Example 5) or aluminum oxide (Comparative Example 6) and the separator having a larger pore size (average pore size = 0.35 μm) than those of Example 1 and Example 2. Each residual capacity after storage was lower than those of Example 1 and Example 2. The reason for these results of Comparative Examples 5 and 6 is supposed as follows. When the inorganic particle layer containing titanium oxide, aluminum oxide, or the like was formed on each surface of the positive electrode sheet, the inorganic particle layer suppressed the transfer of an oxidative decomposition product generated by oxidation of a nonaqueous electrolytic solution that was in contact with a positive electrode active material. In addition, the separator having a large average pore size suppressed the separator clogging to lead to the increase of the residual capacity after storage. However, the separator having an excessively large average pore size increased self-discharge during charged storage at high temperature to cause the reduction of the residual capacity after storage.

Accordingly, the minimum value of the average pore size of the separator is preferably 0.15 μm from the interpolation value of Comparative Example 3, Comparative Example 4, Example 1, and Example 2, while the maximum value of the average pore size of the separator is preferably 0.3 μm from the interpolation value of Example 1, Example 2, Comparative Example 5, and Comparative Example 6. In other words, when the positive electrode sheet has each surface provided with the inorganic particle layer, the separator preferably has an average pore size of 0.15 μm or more and 0.3 μm or less.

In Comparative Example 7, the inorganic particle layer composed of titanium oxide was formed on each surface of the negative electrode sheet, the separator that was used had a small average pore size of 0.07 μm, and the positive electrode sheet had a charging voltage of 4.35 V. In this case, it is supposed that the separator had an effect of suppressing the transfer of an oxidative decomposition product due to the small average pore size but the oxidative decomposition product was deposited in clearances in the inorganic particle layer that was formed on each surface of the negative electrode sheet and caused the clogging. Hence, the result was substantially the same as that of Comparative Example 1.

In Comparative Example 8, the inorganic particle layer composed of titanium oxide was formed on each surface of the negative electrode sheet, the separator that was used had a large average pore size of 0.25 μm, and the positive electrode sheet had a charging voltage of 4.35 V. In this case, it is supposed that the separator could not suppress the transfer of an oxidative decomposition product due to the large average pore size and the oxidative decomposition product was deposited in large amounts in clearances in the inorganic particle layer that was formed on each surface of the negative electrode sheet. As a result, the capacity reduction was larger than that of Comparative Example 7.

Therefore, it is revealed that the inorganic particle layer formed on the surface of the positive electrode sheet provides the effect of increasing the residual capacity after storage but the inorganic particle layer formed on the surface of the negative electrode sheet provides no effect of increasing the residual capacity after storage. Furthermore, the results of Comparative Example 1 to Comparative Example 8, Example 1, and Example 2 reveal that even when the inorganic particle layer is formed on surface of the positive electrode sheet or inorganic particle layer is formed on surface of the negative electrode sheet, the battery capacity is not affected.

The synergistic effect by the combination of the separator having a large pore size and the inorganic particle layer formed on each surface of the positive electrode sheet as described above is explained as below. That is, in a battery in a charged state, the nonaqueous electrolytic solution in contact with the positive electrode active material is oxidized. Then, the oxidative decomposition product passes through pores in the separator to reach the negative electrode side and is reduced on the negative electrode active material to form a deposit. Then, the deposit grows from the negative electrode side and accumulates in empty pores in the separator to finally close the empty pores and the closed pores interfere with the transfer of lithium ions to reduce the volume. In addition, in an environment at high temperature and high voltage, the oxidative decomposition reaction of the electrolytic solution is accelerated to generate the oxidative decomposition product in large amounts, and consequently the capacity deterioration is likely to progress.

A separator having a small average pore size of 0.15 μm or less interferes with the transfer of an oxidative decomposition product of the nonaqueous electrolytic solution from the positive electrode side to the negative electrode side due to the small pore size and hence the oxidative decomposition product of the nonaqueous electrolytic solution

is unlikely to reach the negative electrode side. Therefore, such a separator has the advantage. In contrast, such a separator has the disadvantage of being likely to cause clogging of empty pores by the deposit due to the small empty pores. The difference between Comparative Examples 1 and 2 is thought to be caused by the former advantage, while the insufficient improving effect in Comparative Examples 3 and 4 is thought to be caused by the latter disadvantage.

Meanwhile, a separator having an average pore size of 0.15 μm or more and 0.3 μm or less is likely to transfer an oxidative decomposition product of the nonaqueous electrolytic solution from the positive electrode side to the negative electrode side and hence the oxidative decomposition product is likely to reach the negative electrode side. Therefore, such a separator has the disadvantage. In contrast, such a separator has the advantage of being unlikely to cause clogging of empty pores with the deposit due to the large empty pores. In addition, a separator having an average pore size of more than 0.3 μm has the effect of improving the residual capacity after storage because the clogging of the separator is improved. However, the average pore size is too large and thus self-discharge is likely to be caused during high temperature storage. This is thought to lead to the reduction of the residual capacity after storage.

The inorganic particle layer formed on each surface of the positive electrode sheet suppresses the capacity reduction because the inorganic particle layer has a filter function of trapping the oxidative decomposition product of the electrolytic solution.

Therefore, the combination of the inorganic particle layer formed on each surface of the positive electrode sheet and the separator having a large pore size provides the synergistic effect. That is, the filter function of the inorganic particle layer formed on each surface of the positive electrode sheet interferes with the access of the oxidative decomposition product of the nonaqueous electrolytic solution to the negative electrode side. Moreover, even when the oxidative decomposition product reaches the negative electrode side, the deposit is unlikely to cause clogging because the separator has empty pores having a large pore size.

[Reference Example 5, Comparative Examples 9 and 10, and Examples 3 and 4]

Next, Reference Example 5, Comparative Examples 9 and 10, and Examples 3 and 4 each containing silicon as the negative electrode active material will be described.

[Preparation of Positive Electrode Sheet]

The positive electrode sheet that was used was prepared in a similar manner to that in Reference Examples 1 to 4, Comparative Examples 1 to 8, and Examples 1 and 2 above. For each positive electrode sheet of Reference Example 5, Comparative Example 9, and Examples 3 and 4, aluminum oxide was mixed with a water-soluble binder and water to make a slurry, and the slurry was applied on both sides the positive electrode sheet prepared as above by the doctor blade method to form an inorganic particle layer having a thickness of about 0.5 μm to 3 μm on each surface of the positive electrode sheet.

[Preparation of Negative Electrode Active Material]

First, a polycrystalline silicon solid was prepared by a thermal reduction method. Specifically, a silicon core installed in a metal reaction furnace (reducing furnace) was heated to 800°C with the application of an electric current. A mixed gas of purified high-purity monosilane ($SiH_4$) gas steam and purified hydrogen was flowed to this silicon core to precipitate polycrystalline silicon on the surface of the silicon core, thereby preparing the polycrystalline silicon solid. Next, the polycrystalline silicon solid was pulverized and classified to prepare polycrystalline silicon particles (negative electrode active material) having a purity of 99%. The polycrystalline silicon particles had a crystallite size of 32 nm and a median diameter of 10 μm. Here, the crystallite size was calculated in accordance with the Scherrer equation using a half value width of the peak (111) of silicon in X-ray powder diffraction. The median diameter was obtained from a diameter of 50% accumulated volume in the particle size distribution by laser diffractometry.

[Preparation of Negative Electrode Mixture Slurry]

The following was performed to create a negative electrode mixture slurry: NMP as a dispersion medium was mixed with the polycrystalline silicon particles as a negative electrode active material, a graphite powder having an average particle size of 3.5 μm as a negative electrode conductive agent, and a varnish (solvent; NMP, concentration; 47% by mass in terms of the amount of a polyimide resin after polymerization and imidization by heat treatment) of a precursor for a thermoplastic polyimide resin having the molecular structure of Formula (1), a glass transition temperature of 300°C, and a weight average molecular weight of 50,000 as a negative electrode binder so that the ratio of the negative electrode active material particles, the negative electrode conductive agent, and the polyimide resin after imidization would be 100 : 3 : 8.6 by mass.

[Formula 1]

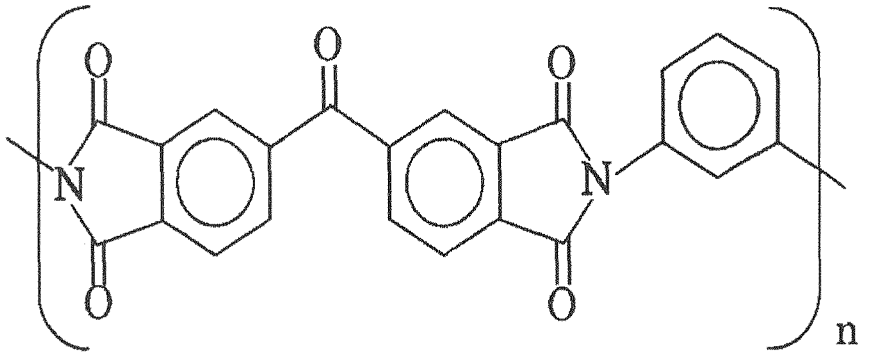

··· (1)

The varnish of the precursor for the polyimide resin can be produced from 3,3',4,4'-benzophenone tetracarboxylic acid diethyl ester of Formula (2) and m-phenylenediamine of Formula (3).

[Formula 2]

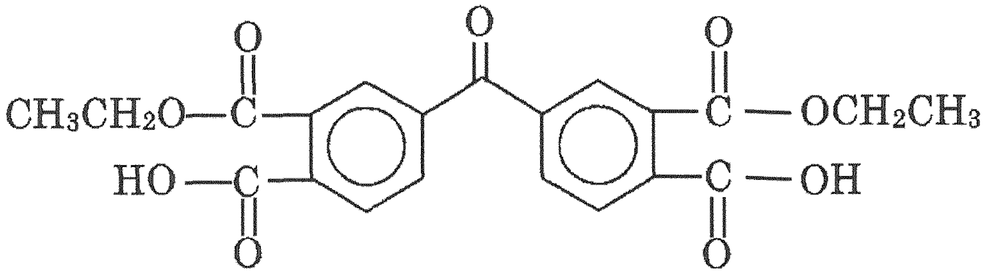

··· (2)

[Formula 3]

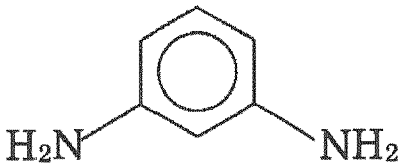

··· (3)

The 3,3',4,4'-benzophenone tetracarboxylic acid diethyl ester can be produced by the reaction of 3,3',4,4'-benzophenone tetracarboxylic acid dianhydride of Formula (4) with two equivalents of ethanol in the presence of NMP.

[Formula 4]

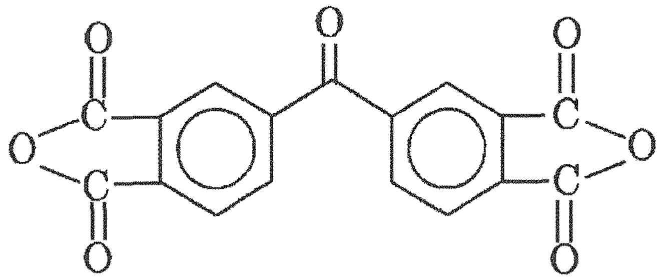

... (4)

[Preparation of Negative Electrode Sheet]

Both sides of a copper alloy foil (C7025 alloy foil, composition; Cu: 96.2% by mass, Ni: 3% by mass, Si: 0.65% by mass, Mg: 0.15% by mass) having a thickness of 18 μm were electrolytically-roughened so as to have a surface roughness Ra (JIS B 0601-1994) of 0.25 μm and an average distance between local peaks S (JIS B 0601-1994) of 0.85 μm, to prepare a negative electrode collector. The negative electrode mixture slurry was applied on both sides of the negative electrode collector in air at 25°C. The coated collector was dried in air at 120°C and then pressed in air at 25°C. The obtained collector was subjected to heat treatment under an argon atmosphere at 400°C for 10 hours to prepare a negative electrode sheet formed with a negative electrode active material layer on each surface of the negative electrode collector. The amount of the negative electrode mixture layer on the negative electrode collector was 5.6 mg/$cm^2$ and the negative electrode mixture layer had a thickness of 56 μm.

The amount of each active material applied on the positive electrode sheet and the negative electrode sheet was controlled so that, at the charging voltage as the design standard, the charging capacity ratio (negative electrode charging capacity/positive electrode charging capacity) would be 1.1 in an area where the positive electrode sheet and the negative electrode sheet were opposed to each other. The nonaqueous electrolyte used was prepared in a similar manner to that in Reference Examples 1 to 4, Comparative Examples 1 to 8, and Examples 1 and 2 above.

[Preparation of Battery]

The positive electrode sheet, the negative electrode sheet, and the nonaqueous electrolyte, each prepared as described above, and a separator made of polyethylene microporous membrane having a thickness of 16 μm and a predetermined average pore size were used to prepare a cylindrical-shaped (ϕ18 mm × 65 mm) nonaqueous electrolyte secondary battery (1 It = 3200 mA) as shown in Fig. 1 that was common to Reference Example 5, Comparative Examples 9 and 10, and Examples 3 and 4.

[Charge and Discharge Test]

For each battery of Examples and Comparative Examples prepared as above, the battery capacity measurement at ordinary temperature and the storage test in a high temperature environment were carried out. The predetermined charging voltage in each of the Examples and Comparative Examples was 4.25 V (in the case of Example 3 and Comparative Examples 9 and 10: the positive electrode sheet had a potential of 4.45 V based on lithium because the silicon used as the negative electrode active material had a potential of about 0.20 V based on lithium), 4.20 V (in the case of Example 4: the positive electrode sheet had a potential of 4.40 V based on lithium), or 4.10 V (in the case of Reference Example 5: the positive electrode sheet had a potential of 4.30 V based on lithium). The other charge condition and discharge condition for each of Examples and Comparative Examples were as below.

● Charge Condition

A battery was charged at 25°C at a constant current of 1.0 It = 3200 mA until the battery voltage reached the predetermined charging voltage and then was charged at the predetermined charging voltage until the current reached 1/50 It = 64 mA.

● Discharge Condition

In each of Examples 3 and 4, Reference Example 5, and Comparative Examples 9 and 10, a battery was

discharged at 25°C at a constant current of 1.0 It until the battery voltage reached 3.00 V (the positive electrode sheet had a potential of 3.20 V based on lithium).

First, in each of Examples 3 and 4, Reference Example 5, and Comparative Examples 9 and 10, the battery was charged and discharged in the charge condition and discharge condition to determine the discharging capacity (mAh) of the battery as the battery capacity of each battery. Then, the battery capacity of each battery was calculated in accordance with the calculation formula below as the relative value to the battery of Reference Example 5.

$$\text{Battery capacity (\%)} = \text{(each battery capacity)/(battery capacity of Reference Example 5)} \times 100$$

[Calculation of Residual Capacity after Storage]

First, a battery was charged at 25°C at a constant current of 0.5 It = 1600 mA until the battery voltage reached the predetermined charging voltage; after the battery voltage reached the predetermined charging voltage, the battery was charged at the predetermined charging voltage until the current reached 1/50 It = 64 mA; and then the battery was discharged at a constant current of 0.5 It until the battery voltage reached 3.0 V. Next, the battery was charged and discharged at 25°C in the charge and discharge conditions to determine the discharging capacity as the initial capacity.

The battery charged in the charge condition was placed in a constant temperature chamber at 60°C and stored for 14 days. Next, the battery was cooled to 25°C and then discharged in the discharge condition. Such a cycle was repeated three times. The discharging capacity at the third discharge (after 42 days) was determined and the residual capacity after storage was calculated in accordance with the formula below. The results are summarized in Table 2.

$$\text{Residual capacity after storage (\%)} = \text{(discharging capacity at the third cycle/initial capacity)} \times 100$$

[Table 2]

| | Voltage (V) | Positive electrode functional layer | Negative electrode functional layer | Average pore size (μm) of separator | Residual capacity after storage | | Battery capacity | |
|---|---|---|---|---|---|---|---|---|
| | | | | | (%) | Judgment | (%) | Judgment |
| Reference Example 5 | 4.10 | Aluminum oxide | - | 0.25 | - | - | 100 | × |
| Comparative Example 9 | 4.25 | Aluminum oxide | - | 0.07 | 81 | × | 108 | O |
| Comparative Example 10 | 4.25 | - | - | 0.25 | 79 | × | 108 | O |
| Example 3 | 4.25 | Aluminum oxide | - | 0.25 | 89 | O | 108 | O |
| Example 4 | 4.20 | Aluminum oxide | - | 0.25 | 91 | O | 106 | O |

The results shown in Table 2 reveal the following. In Reference Example 5, a sufficient battery capacity could not be obtained because the battery was charged at a charging voltage of 4.1 V (the positive electrode sheet had a potential of 4.30 V based on lithium). In Comparative Example 9, a sufficient battery capacity could be obtained because the battery was charged at a charging voltage of 4.25 V (the positive electrode sheet had a potential of 4.45 V based on lithium), but the clogging was caused due to the oxidative decomposition product of the nonaqueous electrolytic solution because the separator having a small pore size was used. Hence, the residual capacity after storage was reduced. In Comparative Example 10, a sufficient battery capacity could be obtained because the battery was charged

at a charging voltage of 4.25 V (the positive electrode sheet had a potential of 4.45 V based on lithium), but the oxidative decomposition product of the nonaqueous electrolytic solution was generated in large amounts on the positive electrode sheet because the positive electrode sheet had each surface provided with no inorganic particle layer. Hence, the decomposition product was deposited on the negative electrode to reduce the residual capacity after storage.

In contrast, in Example 3, a sufficient battery capacity could be obtained because the battery was charged at a charging voltage of 4.25 V (the positive electrode sheet had a potential of 4.45 V based on lithium) and the residual capacity after storage was improved in comparison with Comparative Example 10 because the inorganic particle layer formed on each surface of the positive electrode sheet suppressed the transfer of the oxidative decomposition product of the nonaqueous electrolytic solution. Also in Example 4, a sufficient battery capacity could be obtained because the battery was charged at a charging voltage of 4.20 V (the positive electrode sheet had a potential of 4.40 V based on lithium) and the residual capacity after storage was improved in comparison with Comparative Example 10 because the inorganic particle layer formed on each surface of the positive electrode sheet suppressed the transfer of the oxidative decomposition product of the nonaqueous electrolytic solution.

In this manner, with the nonaqueous electrolyte secondary battery of the invention, it was ascertained that the capacity deterioration after charged storage at high temperature can be suppressed when an inorganic particle layer is formed on each surface of the positive electrode sheet and a separator having a predetermined average pore size is used as well as the potential of the positive electrode active material, namely the final charge potential is a high voltage of 4.35 to 4.60 V based on lithium in order to increase the battery capacity, even in the case that the negative electrode active material is silicon.

In each Example, as the positive electrode active material, a mixture of layered lithium nickel manganese cobalt composite oxide and lithium cobalt oxide containing magnesium, aluminum, and zirconium was used. However, a mixture of $Li_aMn_sNi_tCo_uM1_vO_2$ (M1 is at least one element selected from Mg, Zr, Al, Ti, and Sn, $0 \le a \le 1.2$, $0.1 \le s \le 0.5$, $0.1 \le t \le 0.5$, $u \ge 0$, $0.0001 \le v \le 0.03$, and $s + t + u + v = 1$) as the layered lithium nickel manganese cobalt composite oxide and $Li_bCo_{1-x-y-z}Zr_xMg_yM2_zO_2$ (M2 is at least one element selected from Al, Ti, and Sn, $0 \le b \le 1.1$, $x \ge 0.0001$, $y \ge 0.0001$, $z \ge 0$, and $0.0002 \le x + y + z \le 0.03$) as the lithium cobalt oxide is preferably used. Furthermore, the mixing ratio of the layered lithium nickel manganese cobalt composite oxide and the lithium cobalt oxide is layered lithium nickel manganese cobalt composite oxide : lithium cobalt oxide = 49 : 51 to 10 : 90 and preferably 30 : 70 to 20 : 80 by mass. However, the positive electrode active material is not limited to the above and any positive electrode active material may be used as long as a battery that is charged until the positive electrode sheet has a potential of 4.35 to 4.60 V based on lithium can provide good battery characteristics.

In each Example, the use of graphite or silicon as the negative electrode active material was exemplified. However, natural graphite, artificial graphite, or the like can be used as the graphite. In addition, carbonaceous materials, such as coke and tin, that are capable of reversibly adsorbing and desorbing lithium ions can be used. Alloys and oxides containing silicon or tin, mixtures of them, and the like can also be used.

Usable examples of the nonaqueous solvent (organic solvent) constituting the nonaqueous electrolyte include carbonates, lactones, ethers, esters, and mixtures of two or more of the solvents. Among them, carbonates are preferred.

Specific examples include EC, MEC, and VC used in Examples as well as propylene carbonate (PC), butylene carbonate (BC), fluoroethylene carbonate (FEC), cyclopentanone, sulfolane, 3-methylsulfolane, 2,4-dimethylsulfolane, 3-methyl-1,3-oxazolidin-2-one, dimethyl carbonate (DMC), diethyl carbonate (DEC), methyl propyl carbonate, methyl butyl carbonate, ethyl propyl carbonate, ethyl butyl carbonate, dipropyl carbonate, $\gamma$-butyrolactone, $\gamma$-valerolactone, 1,2-dimethoxyethane, tetrahydrofuran, 2-methyltetrahydrofuran, 1,3-diaxolane, methyl acetate, ethyl acetate, and 1,4-dioxane.

Lithium salts commonly used as the solute in the nonaqueous electrolyte secondary battery can be used as solutes of the nonaqueous electrolyte used in the nonaqueous electrolyte secondary battery of the invention. Examples of such a lithium salt include $LiPF_6$ used in Examples as well as $LiBF_4$, $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $LiAsF_6$, $LiClO_4$, $Li_2B_{10}Cl_{10}$, $Li_2B_{12}Cl_{12}$, and mixtures of them. The amount of the solute dissolved in the nonaqueous solvent is preferably 0.5 to 2.0 mol/L.

In each Example, the positive electrode sheet having a charging voltage of 4.40 to 4.45 V based on lithium was exemplified. However, a positive electrode sheet having a charging voltage of 4.35 V or more based on lithium can provide a similar effect. A positive electrode sheet having a charging voltage of more than 4.60 V based on lithium leads to severe oxidative decomposition of the nonaqueous electrolyte and easy degradation of the positive electrode active material. Hence, the charging voltage is preferably 4.35 V or more and 4.60 V or less based on lithium, and is preferably 4.40 V or more and 4.60 V or less considering the increase effect of a battery capacity.

EXPLANATIONS OF LETTERS OR NUMERALS

10 cylindrical-shaped nonaqueous electrolyte secondary battery
11 positive electrode sheet
11a current collecting tab of positive electrode sheet
12 negative electrode sheet
12a current collecting tab of negative electrode sheet
13 separator
14 wound electrode assembly
17 battery outer can
18 current interrupting seal

**Claims**

**1.** A nonaqueous electrolyte secondary battery comprising:

a positive electrode sheet;
a negative electrode sheet;
a nonaqueous electrolyte; and
a separator,
the positive electrode sheet including a positive electrode active material having a potential of 4.35 to 4.60 V based on lithium,
the positive electrode sheet having a surface provided with an inorganic particle layer, and
the separator having an average pore size of 0.15 μm or more and 0.3 μm or less.

**2.** The nonaqueous electrolyte secondary battery according to claim 1, wherein the inorganic particle layer contains titanium oxide.

**3.** The nonaqueous electrolyte secondary battery according to claim 1, wherein the inorganic particle layer contains aluminum oxide.

**4.** The nonaqueous electrolyte secondary battery according to claim 1, wherein the negative electrode sheet contains graphite as a negative electrode active material.

**5.** The nonaqueous electrolyte secondary battery according to claim 1, wherein the negative electrode sheet contains silicon as a negative electrode active material.

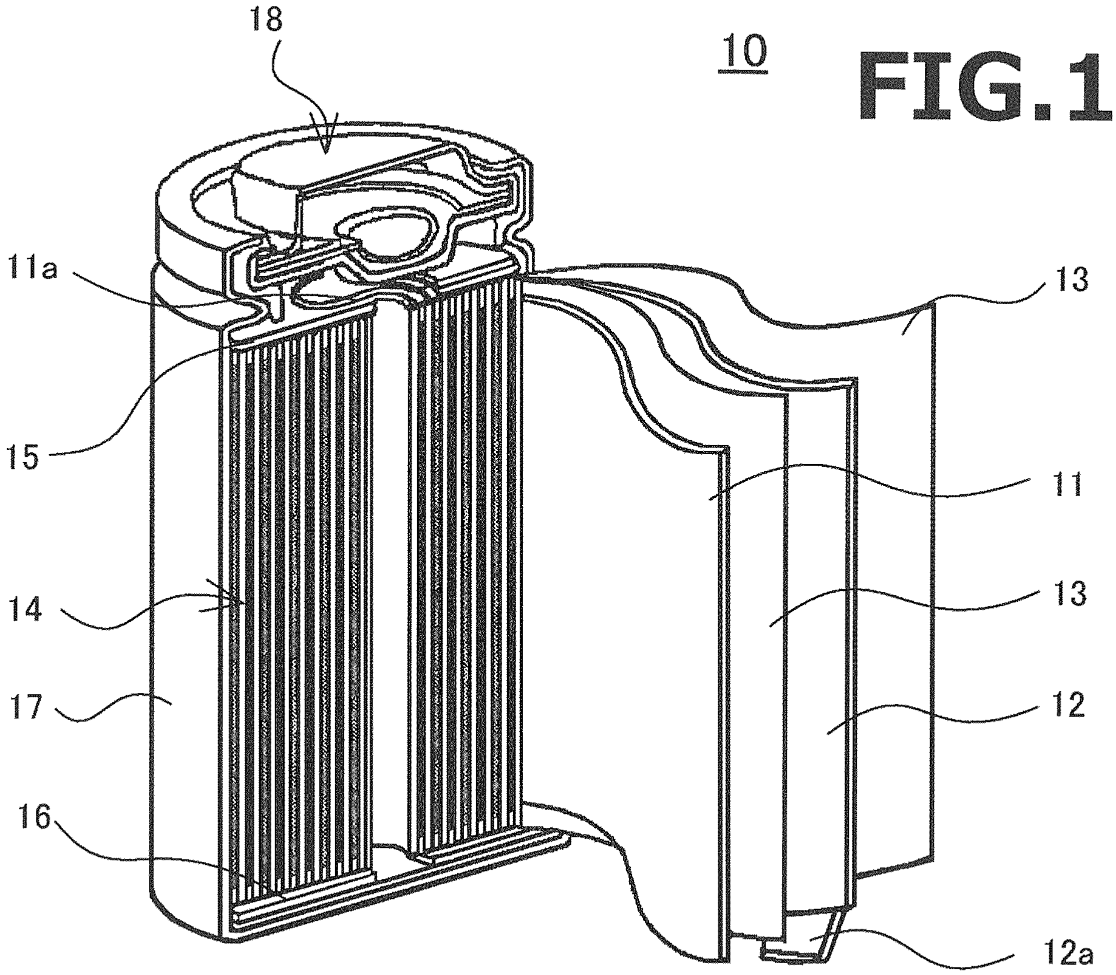


FIG.1

**INTERNATIONAL SEARCH REPORT**

International application No.
PCT/JP2010/071268

A. CLASSIFICATION OF SUBJECT MATTER
*H01M10/052*(2010.01)i, *H01M2/16*(2006.01)i, *H01M4/13*(2010.01)i

According to International Patent Classification (IPC) or to both national classification and IPC

B. FIELDS SEARCHED

Minimum documentation searched (classification system followed by classification symbols)
H01M10/052, H01M2/16, H01M4/13

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-53208 A (Sanyo Electric Co., Ltd.), 06 March 2008 (06.03.2008), abstract; claims; examples; paragraphs [0078] to [0104]<br>& JP 2007-280917 A & JP 2008-53207 A<br>& US 2009/0197181 A1 & US 2009/0136848 A1<br>& WO 2007/108425 A1 & WO 2007/108426 A1<br>& KR 10-2008-0105162 A & KR 10-2009-0007710 A<br>& CN 101449418 A | 1-5 |
| A | JP 2005-259680 A (Mitsubishi Chemical Corp.), 22 September 2005 (22.09.2005), paragraphs [0124] to [0129]<br>& US 2007/0048607 A1 & EP 1705736 A1<br>& WO 2005/057690 A1 & KR 10-2007-0019965 A | 1-5 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 February, 2011 (10.02.11) | 01 March, 2011 (01.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/071268

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-228223 A (Tokuyama Corp.),<br>15 August 2000 (15.08.2000),<br>abstract; claims; examples<br>(Family: none) | 1-5 |
| A | JP 2007-123237 A (Sanyo Electric Co., Ltd.),<br>17 May 2007 (17.05.2007),<br>abstract; claims; examples<br>& US 2009/0291355 A1 & EP 1947710 A1<br>& WO 2007/037145 A1 & KR 10-2008-0049074 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007280917 A